# EUROPEAN PATENT APPLICATION

(11) **EP 4 668 460 A1**
(43) Date of publication of application: **24.12.2025**
(21) Application number: 24213969.9
(22) Date of filing: 19.11.2024
(51) Int. Cl.: H01M 50/50

(54) **BATTERY MODULE AND BATTERY PACK**

(30) Priority: 20.06.2024 CN 202410805164
(71) Applicant: Zhejiang Jinko Energy Storage Co., Ltd., Jiaxing, Zhejiang (CN)
(72) Inventor: ZUO, Chao, Haining City, Jiaxing (CN); WANG, Qinyun, Haining City, Jiaxing (CN); CHEN, Shengyi, Haining City, Jiaxing (CN); FU, Chuanxiang, Haining City, Jiaxing (CN)
(74) Representative: Müller Schupfner & Partner Patent- und Rechtsanwaltspartnerschaft mbB (Muc)

(57) **Abstract**

Battery module (10) and battery pack are provided. Battery module (10) includes: body and second conductive sheet (2). Body has first conductive sheet (13) and electrode base. Second conductive sheet (2) has one end connected to first conductive sheet (13) and fixed to electrode base and other end configured to be connected to adjacent battery module (10). Second conductive sheet (2) is provided with first groove (21), first conductive sheet (13) extends into first groove (21), and conductive block (3) is further provided between first groove (21) and first conductive sheet (13). First conductive sheet (13) extends into first groove (21), which increases contact area between first and second conductive sheets, reduces resistance among battery modules, reduces amount of heat from second conductive sheet (2), and improves efficiency of transfer of current among battery modules (10). Conductive block (3) is provided between first groove (21) and first conductive sheet (13), which increases cross-sectional area at junction between second and first conductive sheets, and further reduces resistance among battery modules.

## Description

### TECHNICAL FIELD

The present disclosure relates to the technical field of energy storage, and in particular to a battery module and a battery pack.

### BACKGROUND

Energy storage battery packs are an indispensable electrical energy storage component for storing electrical energy in solar photovoltaic power generation systems, with a main function of storing electrical energy of the photovoltaic power generation system and supply power to a load in the case of insufficient sunlight, at night, and in emergency situations. The battery pack includes a box and a battery module mounted in the box. A plurality of battery modules are connected through conductive sheets. The conductive sheets are generally made of copper, and are also called copper plates.

As people's demand for electrical energy storage and usage increases, a current flowing between battery modules is becoming larger and larger. Due to high resistance and high heat generation of the existing conductive sheet, the performance of the battery pack is restricted.

### SUMMARY

The present disclosure provides a battery module and a battery pack to solve the problem that high resistance of the conductive sheet in the existing battery module restricts performance of the battery pack.

Some embodiments of the present disclosure provide a battery module, including: a body and a second conductive sheet. The body is configured to store electrical energy. The body has a first conductive sheet and an electrode base. The second conductive sheet has one end connected to the first conductive sheet and the other end configured to be connected to an adjacent battery module; the second conductive sheet and the first conductive sheet are fixed to the electrode base together. The second conductive sheet is provided with a first groove, the first conductive sheet is capable of extending into the first groove, and a conductive block is further provided between the first groove and the first conductive sheet.

In some embodiments, a surface of the second conductive sheet has a fusible layer, the fusible layer melting when a temperature reaches a preset temperature; the fusible layer being made of tin or nickel, and the fusible layer being formed on the surface of the second conductive sheet by electroplating.

In some embodiments, a distance between an upper arm and a lower arm of the first groove gradually increases along a direction going deep into the first groove.

In some embodiments, the first conductive sheet is provided with a first snapping recess, so that a mounting space with a diamond-shaped cross-section is formed between the first conductive sheet and the second conductive sheet, and the conductive block is mounted in the mounting space.

In some embodiments, the first conductive sheet is provided with a second groove, and the first groove is spliced with the second groove.

In some embodiments, the conductive block is provided between an/the upper arm of the first groove and an upper arm of the second groove, and/or between a/the lower arm of the first groove and a lower arm of the second groove, and/or between the upper arm of the first groove and the lower arm of the second groove.

In some embodiments, one of the first groove and the second groove is provided with a protruding portion, and the other is provided with a recessed portion, the protruding portion fitting the recessed portion.

In some embodiments, the protruding portion or the recessed portion is arranged on an upper surface and a lower surface of an arm portion of the first groove extending into the second groove and an upper surface of the arm portion not extending into the second groove; and the protruding portion or the recessed portion is arranged on an upper surface and a lower surface of an arm portion of the second groove extending into the first groove and a lower surface of the arm portion not extending into the first groove.

In some embodiments, the first conductive sheet is provided with a first snapping recess, and the second conductive sheet is provided with a second snapping recess, so that at least one mounting space with a diamond-shaped cross-section is formed between the first conductive sheet and the second conductive sheet, and the conductive block is mounted in the mounting space.

Some embodiments of the present disclosure provide a battery pack, including: a housing and the battery module described above, the battery module being mounted in the housing.

In the present disclosure, through the arrangement of the first groove, the first conductive sheet extends into the first groove, which increases an area of contact between the first conductive sheet and the second conductive sheet, reduces resistance of a path through which a current flows between battery modules, and reduces an amount of heat generated by the second conductive sheet when the current flows through the second conductive sheet, thereby improving efficiency of transfer of the current between the battery modules. Further, the conductive block is provided between the first groove and the first conductive sheet, which increases a cross-sectional area at a junction between the second conductive sheet and the first conductive sheet, reduces the resistance of the path through which the current flows between the battery modules, reduces the amount of heat generated by the second conductive sheet when the current flows through the second conductive sheet, and improves efficiency of transfer of the current between the battery modules.

It should be understood that the general description above and the detailed description in the following are merely exemplary and illustrative, and cannot limit the present disclosure.

### BRIEF DESCRIPTION OF DRAWINGS

FIG. 1 is a schematic structural diagram of a battery pack according to some embodiments of the present disclosure;
FIG. 2 is an exploded view of the battery pack in FIG. 1;
FIG. 3 is a schematic structural diagram of a battery module according to some embodiments of the present disclosure;
FIG. 4 is a partial enlarged view of a region A in FIG. 3;
FIG. 5 is a schematic structural diagram of a second conductive sheet according to some embodiments of the present disclosure;
FIG. 6 is a schematic structural diagram showing that the second conductive sheet is connected to a first conductive sheet and fixed to an electrode base;
FIG. 7 is a schematic structural diagram showing that the second conductive sheet in FIG. 6 is connected to the first conductive sheet and a conductive block is provided therebetween;
FIG. 8 is another schematic structural diagram showing that the second conductive sheet in FIG. 6 is connected to the first conductive sheet and the conductive block is provided therebetween;
FIG. 9 is yet another schematic structural diagram showing that the second conductive sheet in FIG. 6 is connected to the first conductive sheet and the conductive block is provided therebetween;
FIG. 10 is an exploded view of FIG. 9;
FIG. 11 is a schematic structural diagram of another structure of the first conductive sheet;
FIG. 12 is a schematic structural diagram showing that the first conductive sheet in FIG. 11 fits the second conductive sheet;
FIG. 13 is a schematic structural diagram showing that the second conductive sheet and the first conductive sheet in FIG. 7 are provided with a protruding portion and a recessed portion;
FIG. 14 is a schematic structural diagram showing that the second conductive sheet and the first conductive sheet in FIG. 12 are provided with a protruding portion and a recessed portion;
FIG. 15 is another schematic structural diagram showing that the first conductive sheet in FIG. 11 fits the second conductive sheet; and
FIG. 16 is an exploded view of FIG. 15.

### Reference signs:

10: battery module;
20: upper cover;
30: liquid cooling plate;
1: body;
   11: cell;
   12: end plate;
   13: first conductive sheet;
      131: second groove;
      132: recessed portion;
      133: first snapping recess;
   14: electrode base;
   15: steel strip;
2: second conductive sheet;
   21: first groove;
   22: protruding portion;
   23: second snapping recess;
3: conductive block;
4: connecting member.

The accompanying drawings herein, which are incorporated in and constitute part of this specification, illustrate embodiments consistent with the present disclosure and, together with the specification, serve to explain principles of the present disclosure.

### DESCRIPTION OF EMBODIMENTS

In order to better understand the technical solutions of the present disclosure, some embodiments of the present disclosure will be described in detail below with reference to the accompanying drawings.

It should be clear that the described embodiments are only some of rather than all of the embodiments of the present disclosure. Based on the embodiments in the present disclosure, all other embodiments obtained by those of ordinary skill in the art without creative efforts fall within the scope of protection of the present disclosure.

The terms used in the embodiments of the present disclosure are only for the purpose of describing specific embodiments and are not intended to limit the present disclosure. As used in the embodiments of the present disclosure and the appended claims, the singular forms of "a/an", "one", and "the" are intended to include plural forms, unless otherwise clearly specified in the context.

It should be understood that the term "and/or" used herein describes an association relationship between associated objects and represents that three relationships may exist. For example, A and/or B may represent the following three cases: only A exists, both A and B exist, and only B exists. In addition, the character "/" herein generally indicates an "or" relationship between the associated objects.

It should be noted that the direction words "up", "down", "left", and "right" in the embodiments of the present disclosure are described from the perspective shown in the drawings, and should not be understood as limiting the embodiments of the present disclosure. In addition, it should also be understood that, in the context, when an element is referred to as being formed "above" or "below" another element, it is possible that the element is directly formed "above" or "below" the other element, it is also possible that the element is formed "above" or "below" the other element via an intermediate element.

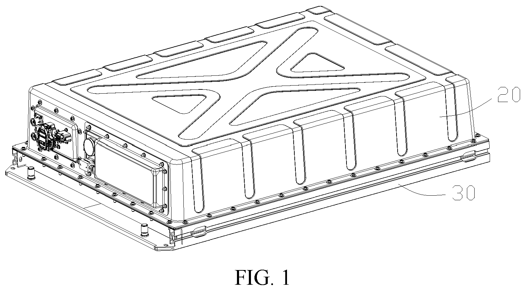

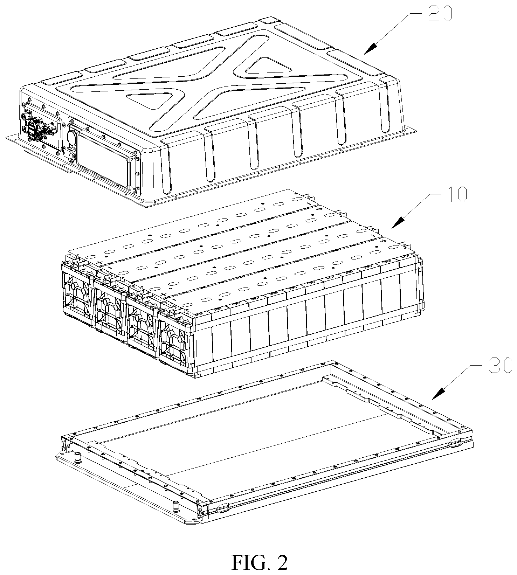

FIG. 1 is a schematic structural diagram of a battery pack according to the present disclosure, and FIG. 2 is an exploded view of the battery pack in FIG. 1. As shown in FIG. 1 and FIG. 2, the battery pack includes: a housing and a battery module 10, and the battery module 10 is mounted in the housing. For example, the housing includes an upper cover 20 and a liquid cooling plate 30, there is an accommodation cavity between the upper cover 20 and the liquid cooling plate 30, and a plurality of battery modules 10 are mounted in the accommodation cavity. The battery module 10 may generate heat when operating, and the liquid cooling plate 30 can cool down the battery module 10 and keep the battery module within a suitable temperature range to ensure normal operation of the battery pack.

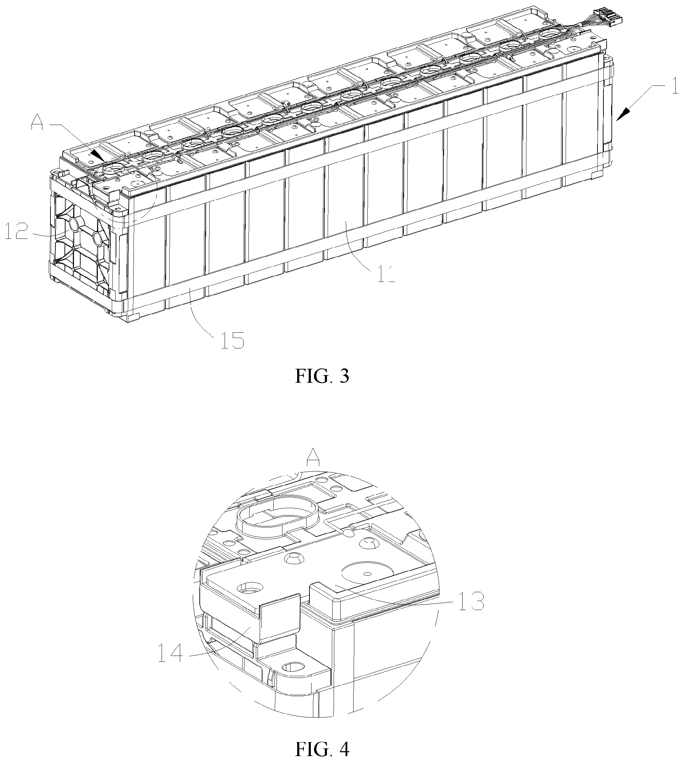

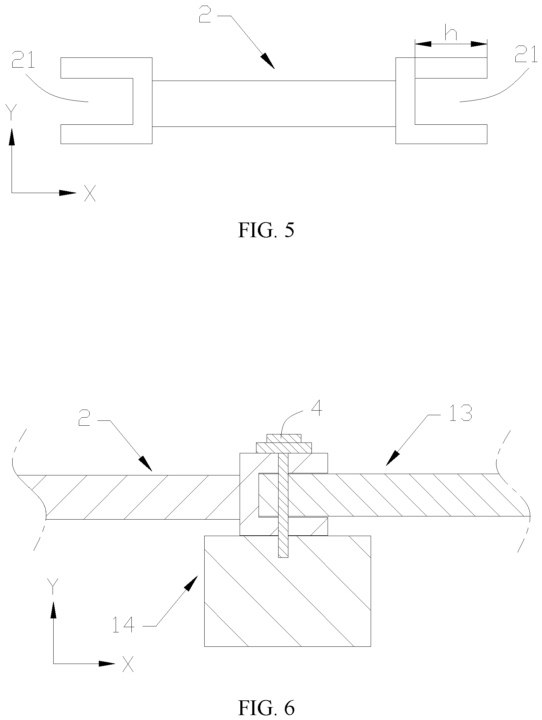

FIG. 3 is a schematic structural diagram of the battery module 10 according to the present disclosure. FIG. 4 is a partial enlarged view of a region A in FIG. 3. FIG. 5 is a schematic structural diagram of a second conductive sheet 2 according to the present disclosure. FIG. 6 is a schematic structural diagram showing that the second conductive sheet 2 is connected to a first conductive sheet 13 and fixed to an electrode base 14. As shown in FIG. 3 to FIG. 6, the battery module 10 includes: a body 1 and a second conductive sheet 2. The body 1 is configured to store electrical energy. The body 1 has a first conductive sheet 13 and an electrode base 14. The second conductive sheet 2 has one end connected to the first conductive sheet 13 and fixed to the electrode base 14 and the other end configured to be connected to an adjacent battery module 10. The second conductive sheet 2 is provided with a first groove 21, and the first conductive sheet 13 is capable of extending into the first groove 21.

In such embodiments, as shown in FIG. 4 to FIG. 6, through the arrangement of the first groove 21, the first conductive sheet 13 extends into the first groove 21, which increases an area of contact between the first conductive sheet 13 and the second conductive sheet 2, reduces resistance of a path through which a current flows between battery modules 10, and reduces an amount of heat generated by the second conductive sheet 2 when the current flows through the second conductive sheet 2, thereby improving efficiency of transfer of the current between the battery modules 10.

An extension direction of the second conductive sheet 2 is defined as a first direction X, a thickness direction of the second conductive sheet 2 is defined as a second direction Y, and the first direction X may be perpendicular to the second direction Y.

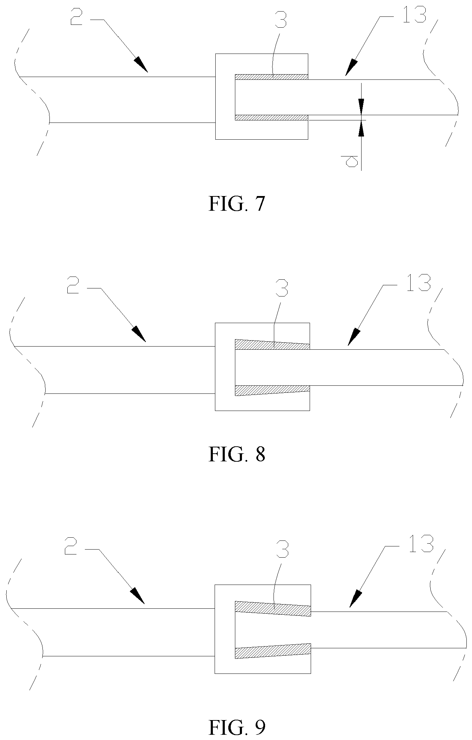

Further, as shown in FIG. 7, a conductive block 3 is further provided between the first groove 21 and the first conductive sheet 13. Through the arrangement of the conductive block 3, a cross-sectional area at a junction between the second conductive sheet 2 and the first conductive sheet 13 is increased, the resistance of the path through which the current flows between the battery modules 10 is further reduced, the amount of heat generated by the second conductive sheet 2 when the current flows through the second conductive sheet 2 is reduced, and efficiency of transfer of the current between the battery modules 10 is improved.

In some embodiments, one or two conductive blocks 3 are provided between the first groove 21 and the first conductive sheet 13.

In some embodiments, viewed along the second direction Y, the conductive block 3 protrudes from an edge of the first groove 21, so that an area of contact between the conductive block 3 and the second conductive sheet 2 is larger and an area of contact between the conductive block 3 and the first conductive sheet 13 is also larger, thereby leading to a better electrical connection effect among the second conductive sheet 2, the conductive block 3, and the first conductive sheet 13.

In some embodiments, as shown in FIG. 8, a distance between an upper arm and a lower arm of the first groove 21 gradually increases along a direction going deep into the first groove 21. A cross section of the conductive block 3 is trapezoidal, whose shape corresponds to a shape of the first groove 21, so that the conductive block 3 can fit better with the upper arm or the lower arm of the first groove 21, and at the same time, the conductive block 3 is not easy to fall off from the first groove 21, thereby improving reliability of the connection between the second conductive sheet 2 and the conductive block 3.

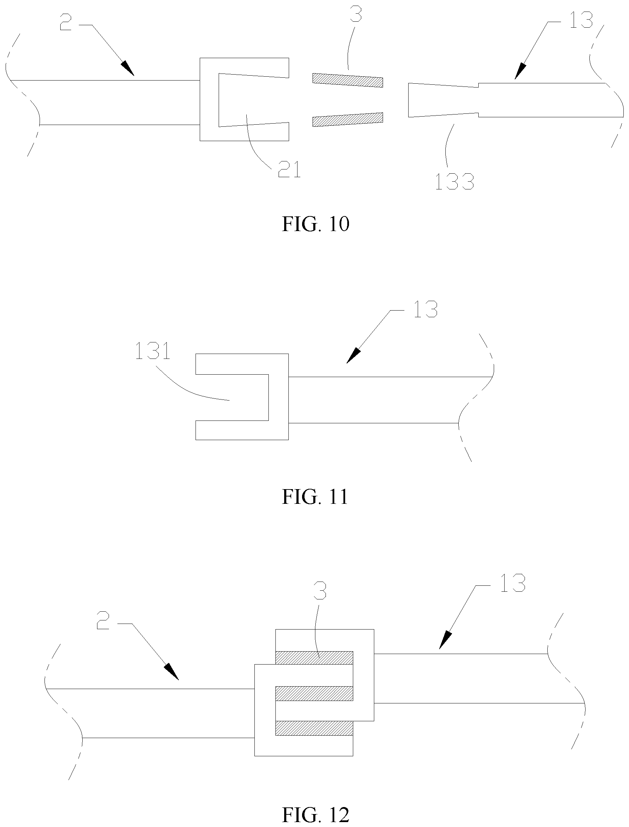

Further, as shown in FIG. 9 and FIG. 10, the first conductive sheet 13 is provided with a first snapping recess 133, so that a mounting space with a diamond-shaped cross-section is formed between the first conductive sheet 13 and the second conductive sheet 2, and the conductive block 3 is mounted in the mounting space.

As shown in FIG. 6 and FIG. 10, since the mounting space is diamond-shaped, the first groove 21 may restrict movement of the conductive block 3 along the first direction X, and the conductive block 3 may restrict movement of the first conductive sheet 13 along the first direction X, so that the first conductive sheet 13, the second conductive sheet 2, and the conductive block 3 are engaged, thereby improving reliability of connection thereof.

It may be understood that only one side of the first conductive sheet 13 along the second direction Y may be provided with the first snapping recess 133, or two sides of the first conductive sheet 13 along the second direction Y may each be provided with the first snapping recess 133. In some embodiments, two sides of the first conductive sheet 13 along the second direction Y are each provided with the first snapping recess 133.

In addition, the first conductive sheet 13 may fit the second conductive sheet 2 first, and then the conductive block 3 is inserted from a side into the mounting space between the first conductive sheet 13 and the second conductive sheet 2.

Furthermore, as shown in FIG. 6, the second conductive sheet 2 and the first conductive sheet 13 are fixed to the electrode base 14 together so that the second conductive sheet 2 is not easy to move relative to the first conductive sheet 13, thereby ensuring reliability of the electrical connection between the two, thereby ensuring reliability of the operation of the battery pack.

As shown in FIG. 3, the body 1 includes a cell 11 and a fireproof layer that are staggered with each other. The cell 11 is configured to input, output, and store electrical energy. The fireproof layer is configured to prevent spreading of fire between adjacent cells 11 when the cell 11 catches fire, thereby preventing thermal runaway of the entire battery module 10 and improving safety of use of the battery module 10 and the battery pack. The battery module 10 has end plates 12 on two sides. The end plates 12 can protect the cell 11. The electrode base 14 may be mounted on the end plate 12 by screw connection, engagement, welding, or the like. Two steel strips 15 bundle the cell 11, the fireproof layer, and the end plate 12 to prevent expansion of the cell 11 during operation.

The fireproof layer includes a mica sheet and an insulation layer. The mica sheet has advantages of good electrical properties, good heat resistance, stable chemical properties, and good mechanical properties. Raw materials of the mica sheet are natural minerals, which have low costs and may not cause environmental pollution during production and processing. The insulation layer is made of, but not limited to, polycarbonate (PC), ceramics, polyethylene (PP), nylon, or the like.

In addition, the first conductive sheet 13 is arranged on the top of the cell 11 and is connected to an electrode of an adjacent cell 11 to achieve an electrical connection between adjacent battery cells 11, thereby realizing series connections of all cells 11 in the battery module 10. Along an arrangement direction of the cells 11, the first conductive sheet 13 located at an edge of the battery module 10 partially protrudes from the cell 11 to a position above the electrode base 14, thereby facilitating the connection between the first conductive sheet 13 and the second conductive sheet 2 and facilitating fixation of the first conductive sheet 13 and the second conductive sheet 2 to the electrode base 14. The first conductive sheet 13 is generally made of aluminum, so it is often called "aluminum bar".

In some embodiments, a surface of the second conductive sheet 2 has a fusible layer, and the fusible layer melts when a temperature reaches a preset temperature.

In such embodiments, through the arrangement of the fusible layer, when the temperature of the second conductive sheet 2 reaches the preset temperature, the fusible layer can absorb a certain amount of heat through a phase change, thereby improving heat resistance of the second conductive sheet 2. At the same time, the fusible layer increases a cross-sectional area of the second conductive sheet 2, reduces resistance of the second conductive sheet 2, reduces the amount of heat generated by the second conductive sheet 2 when the current flows through the second conductive sheet 2, and improves efficiency of transfer of the current between the battery modules 10.

Further, the preset temperature ranges from 110°C to 130°C. For example, the preset temperature may be, for example, 110°C, 112°C, 115°C, 118°C, 120°C, 122°C, 125°C, 128°C, 130°C, or the like.

A value of the preset temperature should not be excessively large or excessively small. If the value of the preset temperature is excessively large (e.g., greater than 130°C), the cell is more likely to catch fire before the fusible layer melts, and it is difficult to improve the heat resistance of the second conductive sheet 2 through a phase change. If the value of the preset temperature is excessively small (e.g., less than 110°C), the fusible layer is extremely easy to melt, which affects stability of operation of the second conductive sheet 2. Therefore, the value of the preset temperature should be selected within a reasonable range. In some embodiments, the preset temperature is 120°C. It may be understood that the value of the preset temperature may be adjusted according to an actual condition or experience.

Furthermore, after the fusible layer melts, fluidity thereof is poor, so that the melted fusible layer is still attached to the surface of the second conductive sheet 2 and may not drip from the second conductive sheet 2, thereby not affecting or damaging other structures of the battery pack. At the same time, after the temperature of the second conductive sheet 2 decreases, the melted fusible layer solidifies on the surface of the second conductive sheet 2, leading to a larger cross-sectional area of the second conductive sheet 2.

For example, the fusible layer is made of tin or nickel, and the fusible layer is formed on the surface of the second conductive sheet 2 by electroplating. Since tin or nickel is relatively soft, tin or nickel is selected as the material of the fusible layer, which can lead to a higher degree of contact between the fusible layer and the second conductive sheet 2. It may be understood that other conductive materials may also be selected as the material of the fusible layer.

In some embodiments, matte tin is plated on the surface of the second conductive sheet 2. That is, a granular tin layer is formed on the surface of the second conductive sheet 2. Since the granular shape can increase an area of contact, plating of matte tin can make the connection between the second conductive sheet 2 and the first conductive sheet 13 more reliable, thereby improving conductive performance of the second conductive sheet 2. In addition, matte tin has good corrosion resistance.

In some embodiments, a ratio of a depth h of the first groove 21 to a width w of the second conductive sheet 2 satisfies 0.5≤h/w≤2. For example, the ratio h/w may be 0.5, 0.8, 1, 1.2, 1.5, 1.8, 2, or the like.

The ratio of the depth h of the first groove 21 to the width w of the second conductive sheet 2 should not be excessively large or excessively small. If the ratio is excessively large (e.g., greater than 2), a probability of relative warping of the second conductive sheet 2 and the first conductive sheet 13 increases, making it difficult to ensure that the second conductive sheet 2 and the first conductive sheet 13 have a large area of contact, and a weight and a cost of the second conductive sheet 2 may increase accordingly. If the ratio is excessively small (e.g., less than 0.5), an area of contact between the second conductive sheet 2 and the first conductive sheet 13 is small, and reliability of connection therebetween is poor. Therefore, the ratio of the depth h of the first groove 21 to the width w of the second conductive sheet 2 should be selected within an appropriate range.

In some embodiments, as shown in FIG. 7, a thickness d of the conductive block 3 satisfies 0.5 mm≤d2≤10 mm. For example, the thickness d of the conductive block 3 may be 0.5 mm, 0.8 mm, 1.0 mm, 2.0 mm, 5.0 mm, 8.0 mm, 10.0 mm, or the like.

In such embodiments, as shown in FIG. 7, the thickness d of the conductive block 3 should not be excessively large or excessively small. If the thickness d of the conductive block 3 is excessively large (e.g., greater than 10.0 mm), the conductive block 3 is heavier and more costly. If the thickness d of the conductive block 3 is excessively small (e.g., less than 0.5 mm), the conductive block 3 cannot effectively increase the cross-sectional area at the junction between the second conductive sheet 2 and the first conductive sheet 13, affecting efficiency of transfer of the current between the battery modules 10. Therefore, the thickness d of the conductive block 3 should be selected within an appropriate range.

In some embodiments, the second conductive sheet 2 is provided with a first through hole, the first conductive sheet 13 is provided with a second through hole, and a connecting member 4 passes through the first through hole and the second through hole to fix the second conductive sheet 2 and the first conductive sheet 13 to the electrode base 14.

As shown in FIG. 6, through the connecting member 4, the second conductive sheet 2 and the first conductive sheet 13 can be reliably fixed to the electrode base 14, and a reliable connection between the second conductive sheet 2 and the first conductive sheet 13 is ensured. The connecting member 4 may be a fastener such as a screw, and the first through hole and the second through hole may be threaded holes. It may be understood that the second conductive sheet 2, the first conductive sheet 13, and the electrode base 14 may alternatively be connected by welding, engagement, or the like.

Further, when the conductive block 3 is provided between the first groove 21 and the first conductive sheet 13, the conductive block 3 may also be provided with a through hole, thereby facilitating fixation of the first conductive sheet 13, the second conductive sheet 2, and the conductive block 3 to the electrode base 14.

In some embodiments, as shown in FIG. 11 and FIG. 12, the first conductive sheet 13 is provided with a second groove 131, and the first groove 21 is spliced with the second groove 131.

In such embodiments, as shown in FIG. 11 to FIG. 12, through the arrangement of the second groove 131, the area of contact between the second conductive sheet 2 and the first conductive sheet 13 is further increased, the resistance of the path through which the current flows between the battery modules 10 is reduced, the amount of heat generated by the second conductive sheet 2 when the current flows through the second conductive sheet 2 is reduced, and efficiency of transfer of the current between the battery modules 10 is improved.

In some embodiments, the upper arm of the first groove 21 extends into the second groove 131, and a lower arm of the second groove 131 extends into the first groove 21.

In this case, the conductive block 3 may be arranged at at least one position between the upper arm of the first groove 21 and an upper arm of the second groove 131, between the lower arm of the first groove 21 and the lower arm of the second groove 131, and between the upper arm of the first groove 21 and the lower arm of the second groove 131.

In some embodiments, the lower arm of the first groove 21 extends into the second groove 131, and the upper arm of the second groove 131 extends into the first groove 21.

In this case, the conductive block 3 may be arranged at at least one position between the upper arm of the first groove 21 and the upper arm of the second groove 131, between the lower arm of the first groove 21 and the lower arm of the second groove 131, and between the lower arm of the first groove 21 and the upper arm of the second groove 131.

Through the arrangement of the at least one conductive block 3, the cross-sectional area at the junction between the second conductive sheet 2 and the first conductive sheet 13 is increased, the resistance of the path through which the current flows between the battery modules 10 is reduced to a greater extent, an amount of heat generated at the junction when the current flows through the second conductive sheet 2 and the first conductive sheet 13 is reduced, and efficiency of transfer of the current between the battery modules 10 is improved. Through the arrangement of different numbers of conductive blocks 3, the cross-sectional area at the junction between the second conductive sheet 2 and the first conductive sheet 13 can be changed. Therefore, the number of the conductive block 3 may be selected and set according to an actual requirement. The conductive block 3 may be a copper block or an aluminum block.

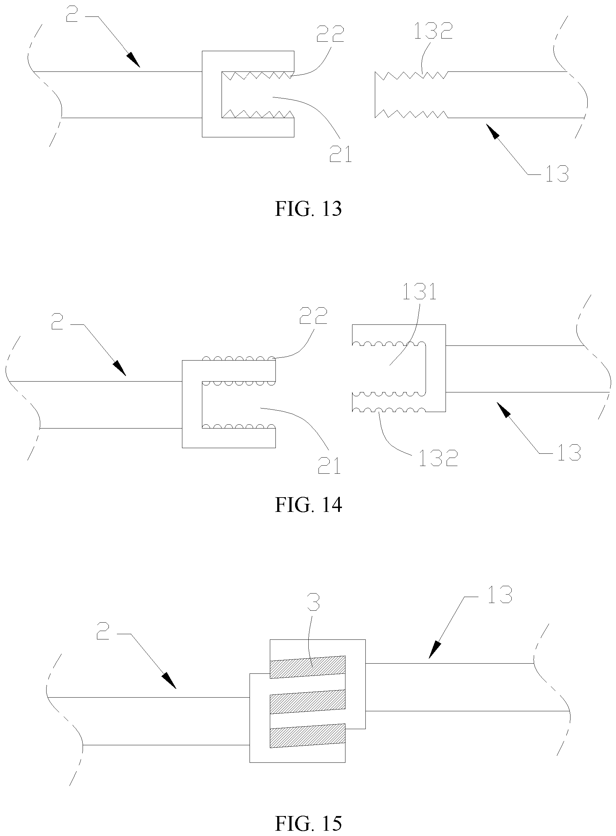

Further, as shown in FIG. 13 and FIG. 14, one of the first groove 21 and the second groove 131 is provided with a protruding portion 22, the other is provided with a recessed portion 132, and the protruding portion 22 fits the recessed portion 132.

Through the fit between the protruding portion 22 and the recessed portion 132, the second conductive sheet 2 and the first conductive sheet 13 are connected more tightly and have more contact points, thereby making the electrical connection therebetween more reliable. At the same time, the fit between the protruding portion 22 and the recessed portion 132 can also limit relative movement of the second conductive sheet 2 and the first conductive sheet 13, so that the second conductive sheet 2 and the first conductive sheet 13 are not easily detached from each other.

As shown in FIG. 13, when the second conductive sheet 2 is provided with the first groove 21 and the first conductive sheet 13 is not provided with the second groove 131, the protruding portion 22 or the recessed portion 132 is arranged on a surface of the upper arm of the first groove 21 facing the lower arm and a surface of the lower arm facing the upper arm and part of an upper surface and part of a lower surface of the first conductive sheet 13, so that the protruding portion 22 and the recessed portion 132 can fit each other.

As shown in FIG. 14, when the second conductive sheet 2 is provided with the first groove 21 and the first conductive sheet 13 is provided with the second groove 131, the protruding portion 22 or the recessed portion 132 is arranged on an upper surface and a lower surface of an arm portion of the first groove 21 extending into the second groove 131 and an upper surface of the arm portion not extending into the second groove 131; and the protruding portion 132 or the recessed portion 22 is arranged on an upper surface and a lower surface of an arm portion of the second groove 131 extending into the first groove 21 and a lower surface of the arm portion not extending into the first groove 21, so that the protruding portion 22 and the recessed portion 132 can fit each other.

For example, the protruding portion 22 and the recessed portion 132 may be in a shape of a triangle or a semi-circle. It may be understood that the protruding portion 22 and the recessed portion 132 may alternatively be in other shapes, which is not limited in the present disclosure.

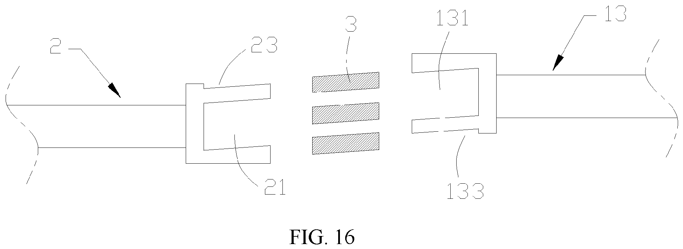

In some embodiments, as shown in FIG. 15 and FIG. 16, the first groove 21 and the second groove 131 are diamond-shaped, the arm portion of the first groove 21 extending into the second groove 131 is provided with a second snapping recess 23, and the arm portion of the second groove 131 extending into the first groove 21 is provided with a first snapping recess 133, so that at least one mounting space with a diamond-shaped cross-section is formed between the second conductive sheet 2 and the first conductive sheet 13, and the diamond-shaped conductive block 3 is mounted in the mounting space.

The upper arm and the lower arm of the first groove 21 are both inclined relative to the first direction X, so that the first groove 21 is in a shape of a diamond. The upper arm and the lower arm of the second groove 131 are both inclined relative to the first direction X, so that the second groove 131 is in a shape of a diamond.

In such embodiments, as shown in FIG. 15 and FIG. 16, for example, the upper arm of the first groove 21 extends into the second groove 131, and the lower arm of the second groove 131 extends into the first groove 21. The second snapping recess 23 and the upper arm of the second groove 131 can be adapted to limit movement of the conductive block 3 located therebetween relative to the second conductive sheet 2 along the extension direction of the second conductive sheet 2 and can also limit movement of the conductive block 3 relative to the first conductive sheet 13 along an extension direction of the first conductive sheet 13. Similarly, the first snapping recess 133 and the lower arm of the first groove 21 as well as the upper arm of the first groove 21 and the lower arm of the second groove 131 can also have a same limiting effect on the conductive block 3. As a result, the second conductive sheet 2, the first conductive sheet 13, and the conductive block 3 limit relative movement of each other, thereby improving reliability of the connection therebetween.

For example, the first groove 21 may fit the second groove 131 first, and then the conductive block 3 is inserted from a side into the mounting space between the first conductive sheet 13 and the second conductive sheet 2.

The above are merely preferred embodiments of the present disclosure and are not intended to limit the present disclosure. Various changes and modifications can be made to the present disclosure by those skilled in the art. Any modifications, equivalent substitutions, improvements, and the like made within the spirit and principle of the present disclosure shall fall into the protection scope of the present disclosure.

## Claims

1. A battery pack, comprising a battery module (10), wherein the battery module (10), comprises:
a body, configured to store electrical energy, and having a first conductive sheet (13) and an electrode base (14); and
a second conductive sheet (2), having one end connected to the first conductive sheet (13) and the other end configured to be connected to an adjacent battery module (10), wherein the second conductive sheet (2) and the first conductive sheet (13) are fixed to the electrode base (14) together;
wherein the second conductive sheet (2) is provided with a first groove (21), the first conductive sheet (13) is capable of extending into the first groove (21), and a conductive block (3) is provided between the first groove (21) and the first conductive sheet (13).

2. The battery pack according to claim 1, wherein
a surface of the second conductive sheet (2) is provided with a fusible layer, the fusible layer melts at a preset temperature; and
the fusible layer is made of tin or nickel, and the fusible layer is formed on the surface of the second conductive sheet (2) by electroplating.

3. The battery pack according to claim 1 or 2, wherein
a distance between an upper arm and a lower arm of the first groove (21) gradually increases along a direction going deep into the first groove (21).

4. The battery pack according to any one of claims 1 to 3, wherein
the first conductive sheet (13) is provided with a first snapping recess, such that a mounting space with a diamond-shaped cross-section is formed between the first conductive sheet (13) and the second conductive sheet (2), and the conductive block (3) is mounted in the mounting space.

5. The battery pack according to any one of claims 1 to 4, wherein
the first conductive sheet (13) is provided with a second groove (131), and the first groove (21) is spliced with the second groove (131).

6. The battery pack according to claim 5, wherein
the conductive block (3) is provided between an upper arm of the first groove (21) and an upper arm of the second groove (131), and/or between a lower arm of the first groove (21) and a lower arm of the second groove (131), and/or between the upper arm of the first groove (21) and the lower arm of the second groove (131).

7. The battery pack according to claim 5 or 6, wherein
one of the first groove (21) and the second groove (131) is provided with a protruding portion (22), and the other of the first groove (21) and the second groove (131) is provided with a recessed portion (132), the protruding portion (22) matches the recessed portion (132).

8. The battery pack according to any one of claims 5 to 7, wherein
the protruding portion (22) or the recessed portion (132) is arranged on an upper surface and a lower surface of an arm portion of the first groove (21) extending into the second groove (131), and is arranged on an upper surface of the arm portion not extending into the second groove (131); and
the protruding portion (22) or the recessed portion (132) is arranged on an upper surface and a lower surface of an arm portion of the second groove (131) extending into the first groove (21), and is arranged on a lower surface of the arm portion not extending into the first groove (21).

9. The battery pack according any one of claims 1 to 8, wherein
the first conductive sheet (13) is provided with a first snapping recess, and the second conductive sheet (2) is provided with a second snapping recess, and
at least one mounting space with a diamond-shaped cross-section is formed between the first conductive sheet (13) and the second conductive sheet (2), and the conductive block (3) is mounted in the mounting space.

10. The battery pack according to any one of the preceding claims, further comprising a housing, wherein the battery module (10) is mounted in the housing.

11. The battery pack according to any one of the preceding claims, wherein, in a thickness direction of the second conductive sheet (2), the conductive block (3) protrudes from an edge of the first groove (21).

12. The battery pack according to any one of the preceding claims, wherein the second conductive sheet (2) and the first conductive sheet (13) are fixed to the electrode base together.

13. The battery pack according to any one of the preceding claims, wherein the second conductive sheet (2) is provided with a first through hole, the first conductive sheet (13) is provided with a second through hole, and a connecting member passes through the first through hole and the second through hole to fix the second conductive sheet (2) and the first conductive sheet (13) to the electrode base (14).

14. The battery pack according to any one of the preceding claims, wherein the second conductive sheet (2), the first conductive sheet (13), and the electrode base 14 are connected by welding or engagement.

15. The battery pack according to any one of claims 2 to 14, wherein the preset temperature ranges from 110°C to 130°C.

## Amended claims

### Amended claims in accordance with Rule 137(2) EPC.

1. A battery pack, comprising a battery module, wherein the battery module, comprises:
a body, configured to store electrical energy, and having a first conductive sheet and an electrode base; and
a second conductive sheet, having one end connected to the first conductive sheet and the other end configured to be connected to an adjacent battery module, wherein the second conductive sheet and the first conductive sheet are fixed to the electrode base together;
wherein the second conductive sheet is provided with a first groove, the first conductive sheet is capable of extending into the first groove, and a conductive block is provided between the first groove and the first conductive sheet, and
the first conductive sheet is provided with a second groove, and the first groove is spliced with the second groove.

2. The battery pack according to claim 1, wherein
a surface of the second conductive sheet is provided with a fusible layer, the fusible layer melts at a preset temperature; and
the fusible layer is made of tin or nickel, and the fusible layer is formed on the surface of the second conductive sheet by electroplating.

3. The battery pack according to claim 1, wherein
a distance between an upper arm and a lower arm of the first groove gradually increases along a direction going deep into the first groove.

4. The battery pack according to claim 3, wherein
the first conductive sheet is provided with a first snapping recess, such that a mounting space with a diamond-shaped cross-section is formed between the first conductive sheet and the second conductive sheet, and the conductive block is mounted in the mounting space.

5. The battery pack according to claim 1, wherein
the conductive block is provided between an upper arm of the first groove and an upper arm of the second groove, and/or between a lower arm of the first groove and a lower arm of the second groove, and/or between the upper arm of the first groove and the lower arm of the second groove.

6. The battery pack according to claim 1, wherein
one of the first groove and the second groove is provided with a protruding portion, and the other of the first groove and the second groove is provided with a recessed portion, the protruding portion matches the recessed portion.

7. The battery pack according to claim 6, wherein
the protruding portion or the recessed portion is arranged on an upper surface and a lower surface of an arm portion of the first groove extending into the second groove, and is arranged on an upper surface of the arm portion not extending into the second groove; and
the protruding portion or the recessed portion is arranged on an upper surface and a lower surface of an arm portion of the second groove extending into the first groove, and is arranged on a lower surface of the arm portion not extending into the first groove.

8. The battery pack according to claim 1, wherein
the first conductive sheet is provided with a first snapping recess, and the second conductive sheet is provided with a second snapping recess, and
at least one mounting space with a diamond-shaped cross-section is formed between the first conductive sheet and the second conductive sheet, and the conductive block is mounted in the mounting space.

9. The battery pack according to claim 1, further comprising a housing, wherein the battery module is mounted in the housing.

10. The battery pack according to claim 1, in a thickness direction of the second conductive sheet, the conductive block protrudes from an edge of the first groove.

11. The battery pack according to claim 1, wherein the second conductive sheet is provided with a first through hole, the first conductive sheet is provided with a second through hole, and a connecting member passes through the first through hole and the second through hole to fix the second conductive sheet and the first conductive sheet to the electrode base 14.

12. The battery pack according to claim 1, wherein the second conductive sheet, the first conductive sheet, and the electrode base 14 are connected by welding or engagement.

13. The battery pack according to claim 2, wherein the preset temperature ranges from 110°C to 130°C.
